# EUROPÄISCHE PATENTSCHRIFT

(11) **EP 4 308 312 B1**
(45) Veröffentlichungstag und Bekanntmachung des Hinweises auf die Patenterteilung: **18.09.2024**
(21) Anmeldenummer: 21751570.9
(22) Anmeldetag: 28.07.2021
(51) Int. Cl.: B06B 3/00, G01L 5/00, B29C 65/00, B23K 20/10

(54) **ULTRASCHALLSCHWEISSEINRICHTUNG MIT KRAFTSENSOR**
ULTRASONIC WELDING DEVICE COMPRISING A FORCE SENSOR
DISPOSITIF DE SOUDAGE PAR ULTRASONS COMPRENANT UN CAPTEUR DE FORCE

(43) Veröffentlichungstag der Anmeldung: 24.01.2024
(73) Patentinhaber: Schunk Sonosystems GmbH, 35435 Wettenberg (DE)
(72) Erfinder: MÜLLER, Stefan, 35580 Wetzlar (DE); GÜNTHER, Daniel, 35428 Langgöns (DE)
(74) Vertreter: Qip Patentanwälte Dr. Kuehn & Partner mbB
(86) Internationale Anmeldenummer: PCT/EP2021/071196
(87) Internationale Veröffentlichungsnummer: WO 2023/006199

(56) Entgegenhaltungen:
- DE-A1- 102015 101 524
- US-A1- 2004 050 474
- US-B1- 6 190 296

## Beschreibung

### GEBIET DER ERFINDUNG

Die vorliegende Erfindung betrifft eine Ultraschallschweißeinrichtung sowie ein Verfahren zum Betreiben dieser Ultraschallschweißeinrichtung.

### HINTERGRUND DER ERFINDUNG

Für verschiedenste technische Anwendungen kann es notwendig sein, zwei Komponenten mechanisch fest und/oder elektrisch leitfähig miteinander zu verbinden. Beispielsweise kann es für verschiedene Einsatzzwecke erforderlich sein, Litzen von Kabeln mechanisch und elektrisch leitfähig miteinander zu verbinden. Dadurch können beispielsweise Kabelstränge oder Kabelbäume gefertigt werden, die dazu verwendet werden können, elektrische Verbraucher, etwa innerhalb eines Fahrzeugs, miteinander, mit einer Energiequelle und/oder mit einer Steuerung elektrisch leitfähig zu verbinden.

Um elektrisch leitfähige Komponenten stoffschlüssig und somit mechanisch belastbar und elektrisch gut leitfähig miteinander zu verbinden, wurde das sogenannte Ultraschallschweißen entwickelt. Dabei handelt es sich um eine spezielle Ausprägung des Reibschweißens, bei dem zu verschweißende Komponenten als Fügepartner mit Oberflächen aneinander in Anlage gebracht und unter geringem Druck und hochfrequenten mechanischen Schwingungen gegeneinander bewegt werden. Die Schwingungen können mithilfe einer Sonotrodenanordnung erzeugt werden, in der Ultraschallschwingungen mit Frequenzen von typischerweise 20 kHz bis 50 kHz erzeugt und auf wenigstens einen der Fügepartner übertragen werden. Durch plastisches Fließen können sich die Fügepartner dann oberflächennah ineinander verzahnen oder verhaken, ohne dass die Materialien der Fügepartner notwendigerweise schmelzen. Durch Ultraschallschweißen können Fügepartner daher schonend, schnell und wirtschaftlich miteinander verbunden werden.

Ultraschallschweißen kann insbesondere auch zum Verschweißen von metallischen Fügepartnern wie zum Beispiel zum Verschweißen von mehreren Litzen von Kabeln miteinander, zum verschweißenden Kompaktieren von einzelnen Adern innerhalb einer Litze, zum Verschweißen von einer oder mehreren Litzen mit Kontaktelementen und/oder zum Verschweißen von Blechen eingesetzt werden. Hierzu werden die Fügepartner im Allgemeinen in einen Aufnahmeraum einer Ultraschallschweißeinrichtung eingelegt und anschließend zwischen einem Sonotrodenkopf einer Ultraschall-schwingenden Sonotrode und einem Amboss miteinander verschweißt.

Um beim Ultraschallschweißen mit der Sonotrodenanordnung Ultraschallschwingungen auf die zu verschweißenden Fügepartner ausüben zu können, ist die Sonotrode typischerweise an einem Ende mechanisch mit einem Schwingungsgeber gekoppelt. Beabstandet zu dem Schwingungsgeber weist die Sonotrode den Sonotrodenkopf auf. Von dem Schwingungsgeber beispielsweise mittels eines Konverters erzeugte und eventuell mittels eines Boosters modifizierte Ultraschallschwingungen werden typischerweise über den länglichen Körper der Sonotrode und/oder zusätzliche Komponenten bis zum Sonotrodenkopf übertragen. Indem die Sonotrode und der Amboss relativ zueinander aufeinander zu verlagert werden und dabei die Fügepartner zwischen sich beklemmen, können die Ultraschallschwingungen auf die Fügepartner übertragen werden.

Es wurde beobachtet, dass Ergebnisse eines Ultraschallschweißvorgangs u.a. stark von den dabei auf die Fügepartner ausgeübten Kräften abhängen können.

DE 10 2015 101 524 A1 beschreibt Ansätze zur Kraftmessung und -regelung bei Ultraschall-basierenden Prozessen.

### ZUSAMMENFASSUNG DER ERFINDUNG UND VORTEILHAFTER AUSFÜHRUNGSFORMEN

Es kann ein Bedarf an einer Ultraschallschweißeinrichtung sowie an einem Verfahren, wie diese Ultraschallschweißeinrichtung zu betreiben ist, bestehen, welche es erlauben, Ergebnisse eines Ultraschallschweißvorgangs zu verbessern. Insbesondere kann ein Bedarf an einer entsprechenden Ultraschallschweißeinrichtung bzw. einem Betriebsverfahren bestehen, mithilfe derer während eines Ultraschallschweißvorgangs herrschende Bedingungen derart überwacht und/oder geregelt werden können, dass sich Eigenschaften einer daraus resultierenden Verschweißung wie beispielsweise eine mechanische Belastbarkeit, elektrische Leitfähigkeit, etc. einer die Fügepartner verbindenden Schweißverbindung verbessern lassen.

Einem solchen Bedarf kann mit dem Gegenstand der unabhängigen Ansprüche entsprochen werden. Vorteilhafte Ausführungsformen sind in den abhängigen Ansprüchen sowie der nachfolgenden Beschreibung definiert.

Ein erster Aspekt der Erfindung betrifft eine Ultraschallschweißeinrichtung, welche eine Sonotrodenanordnung, einen Amboss, eine Verlagerungseinrichtung und einen Kraftsensor aufweist. Die Sonotrodenanordnung weist an einem distalen Bereich einen Sonotrodenkopf auf. Die Sonotrodenanordnung ist dazu konfiguriert, Ultraschallschwingungen, welche an der Sonotrodenanordnung in einem Bereich entfernt von dem Sonotrodenkopf erzeugt werden, an den Sonotrodenkopf so zu übertragen, dass der Sonotrodenkopf in einer Schwingungsrichtung der Sonotrodenanordnung schwingt und dass die Sonotrodenanordnung an einer Nullpunktposition, welche von dem Sonotrodenkopf bezogen auf die Schwingungsrichtung beabstandet angeordnet ist, in der Schwingungsrichtung minimal schwingt. Die Verlagerungseinrichtung ist dazu konfiguriert, die Sonotrodenanordnung und den Amboss in einer Verlagerungsrichtung relativ zueinander zu verlagern. Der Kraftsensor ist derart in einem Kontaktbereich angrenzend an die Nullpunktposition positioniert und konfiguriert, dass mithilfe des Kraftsensors Kräfte messbar sind, welche von der Sonotrodenanordnung parallel zu der Verlagerungsrichtung auf den Kraftsensor ausgeübt werden, wobei innerhalb des Kontaktbereichs ein Maximalabstand zu der Nullpunktposition kleiner als 20% eines Abstandes zwischen der Nullpunktposition und einer geometrischen Mitte des Sonotrodenkopfs ist.

Gemäß einem zweiten Aspekt der Erfindung wird ein Verfahren zum Betreiben einer Ultraschallschweißeinrichtung gemäß einer Ausführungsform des ersten Aspekts der Erfindung vorgeschlagen. Das Verfahren umfasst dabei zumindest die folgenden Schritte:
Ermitteln einer von der Sonotrodenanordnung auf den Kraftsensor ausgeübten Kraft, Betreiben der Ultraschallschweißeinrichtung unter Berücksichtigung der ermittelten Kraft.

Ohne den Umfang der Erfindung in irgendeiner Weise zu beschränken, können Ideen und mögliche Merkmale zu Ausführungsformen der Erfindung unter anderem als auf den nachfolgend beschriebenen Gedanken und Erkenntnissen beruhend angesehen werden.

Kurz und grob zusammengefasst kann ein Grundgedanke zu der hierin beschriebenen Idee darin gesehen werden, eine Ultraschallschweißeinrichtung mit einer Möglichkeit auszustatten, Kräfte, die während eines Schweißvorgangs auf Fügepartner ausgeübt werden, möglichst präzise messen zu können, sodass eine Information über diese Kräfte beispielsweise dazu genutzt werden kann, bei dem Schweißvorgang eingesetzte Parameter zu optimieren. Dabei wurde festgestellt, dass die gewünschte Kraftmessung vorzugsweise mit einem Kraftsensor ausgeführt werden kann, der mit der Sonotrodenanordnung in der Nähe einer Nullpunktposition zusammenwirkt, da bei dieser Positionierung unter anderem einerseits die mithilfe des Kraftsensors gemessenen Kräfte einen ausreichend genauen Rückschluss auf die während des Schweißvorgangs tatsächlich auf die Fügepartner wirkenden Kräfte zulassen und andererseits der Kraftsensor keinen übermäßigen Vibrationen ausgesetzt ist.

Nachfolgend werden mögliche Details zu Ausgestaltungen der hierin vorgeschlagenen Ultraschallschweißeinrichtung erläutert.

Die Ultraschallschweißeinrichtung verfügt über eine Sonotrodenanordnung. Die Sonotrodenanordnung ist dazu ausgestaltet, einen Sonotrodenkopf in Ultraschallschwingungen zu versetzen. Die Sonotrodenanordnung setzt sich hierzu typischerweise aus mehreren Komponenten zusammen, insbesondere einem Schwingungsgeber und einer Sonotrode. Der Schwingungsgeber ist an einem proximalen Ende der Sonotrodenanordnung angeordnet und dazu vorgesehen, die Ultraschallschwingungen zu erzeugen. Hierzu verfügt der Schwingungsgeber im Allgemeinen über einen Konverter, der periodisch variierende elektrische Signale in mechanische Schwingungen umsetzt. In vielen, aber nicht allen Fällen ist in dem Schwingungsgeber ferner ein Booster vorgesehen, mithilfe dessen die mechanischen Schwingungen modifiziert werden, bevor diese von dem Schwingungsgeber auf die Sonotrode übertragen werden. In dem Schwingungsgeber werden die Ultraschallschwingungen in einer Schwingungsrichtung erzeugt. Viele Ultraschallschweißeinrichtungen sind dazu eingerichtet, die Ultraschallschwingungen als Longitudinalschwingung zu erzeugen, d.h., als Schwingungen, deren Schwingungsrichtung parallel zu einer Längserstreckungsrichtung der Sonotrodenanordnung verläuft. Eine Schwingungsamplitude einer hauptsächlich für den Ultraschallschweißprozess eingesetzten Schwingung verläuft dabei in Richtung der Schwingungsausbreitung innerhalb der Sonotrodenanordnung. In der typischerweise länglichen Sonotrode werden die mechanischen Schwingungen dann hin zu dem Sonotrodenkopf, der sich beispielsweise nahe einem distalen Ende der Sonotrodenanordnung befinden kann, geleitet. Prinzipiell können Ultraschallschweißeinrichtungen alternativ auch zur Erzeugung von Transversalschwingungen ausgestaltet sein.

Da mithilfe der Sonotrodenanordnung sowohl Kräfte ausgeübt als auch die Ultraschallschwingungen auf Fügepartner übertragen werden sollen, müssen die verschiedenen Komponenten der Sonotrodenanordnung typischerweise in einem Gehäuse gehalten, gelagert und/oder abgestützt werden. Um weder die genannten Komponenten noch die entsprechende Halterung, Lagerung bzw. Abstützung insbesondere aufgrund der Ultraschallschwingungen übermäßig zu belasten, wird dabei ausgenutzt, dass es entlang der Sonotrodenanordnung typischerweise ein oder mehrere Positionen gibt, an denen die Sonotrode nicht oder zumindest deutlich schwächer schwingt, als in benachbarten Regionen. Solche Positionen werden üblicherweise als Nullpunktpositionen bezeichnet und stellen bezüglich der entlang der Sonotrodenanordnung zu übertragenden Schwingungen Schwingungsknoten dar. Die an oder nahe bei einer solchen Nullpunktposition angeordnete Halterung, Lagerung bzw. Abstützung wird häufig als Nullpunktlager bezeichnet.

Der Amboss dient während des Schweißvorgangs als Gegenlager für die Fügepartner, die von dem Sonotrodenkopf der Sonotrodenanordnung kraftbeaufschlagt und in Schwingung versetzt werden. Hierbei kann der Amboss hin zu dem Sonotrodenkopf oder alternativ der Sonotrodenkopf hin zu dem Amboss in bzw. entgegen der Verlagerungsrichtung verlagert und kraftbeaufschlagt werden. Als weitere Alternative können sowohl der Amboss als auch der Sonotrodenkopf verlagert werden.

Um die Fügepartner miteinander zu verschweißen, werden diese in einem Aufnahmeraum zwischen dem Sonotrodenkopf und dem Amboss aufgenommen. Anschließend werden der Sonotrodenkopf und der Amboss mithilfe der Verlagerungseinrichtung relativ zueinander aufeinander zu bewegt. Die Verlagerungseinrichtung kann hierzu eine geeignete Mechanik, Hydraulik, Pneumatik oder Ähnliches aufweisen, um die gewünschte Relativbewegung zu bewirken. Je nach Konzept der Ultraschallschweißeinrichtung kann hierbei eine der beiden Komponenten ortsfest gehalten und die andere Komponente von der Verlagerungseinrichtung in einer Verlagerungsrichtung verlagert werden. Alternativ können auch beide Komponenten verlagert werden. Die Verlagerungsrichtung verläuft dabei quer, vorzugsweise senkrecht, zu einer Oberfläche des Sonotrodenkopfs, mit der der Sonotrodenkopf die Fügepartner kontaktiert, um die Ultraschallschwingungen auf sie zu übertragen. Dabei verläuft die Verlagerungsrichtung im Regelfall quer, insbesondere senkrecht, zu der Längserstreckungsrichtung der Sonotrodenanordnung.

Prinzipiell ist vorstellbar, die innerhalb der Ultraschallschweißeinrichtung auf die Fügepartner ausgeübten Kräfte auf verschiedene Arten zu ermitteln. Beispielsweise könnten die von der Verlagerungseinrichtung bewirkten Kräfte direkt gemessen werden. Bei diesem einfach umzusetzenden Ansatz wurde jedoch beobachtet, dass die in der Verlagerungseinrichtung gemessenen Kräfte oft nicht den tatsächlich auf die Fügepartner ausgeübten Kräften zu entsprechen scheinen. Es wird davon ausgegangen, dass zum Beispiel Reibungseffekte, Hafteffekte (insbesondere in Form sogenannter Slip-Stick-Effekte), temporäre Verkantungen von Komponenten gegenüber anderen Komponenten und Ähnliches, wie sie bei den von der Verlagerungseinrichtung bewegten Komponenten während deren Verlagerung auftreten können, dazu führen, dass die von der Verlagerungseinrichtung bewirkten Kräfte nicht vollständig und reproduzierbar auf die Fügepartner übertragen werden.

Als alternativer Ansatz wird daher für die hierin beschriebene Ultraschallschweißeinrichtung vorgeschlagen, einen Kraftsensor angrenzend an die Nullposition der Sonotrodenanordnung anzuordnen. Der Kraftsensor soll hierbei innerhalb eines begrenzten Kontaktbereichs angeordnet werden, der sich an der Nullpunktposition bzw. in einem ausreichend kleinen Abstand zu dieser Nullpunktposition befindet.

Der Kraftsensor soll dabei derart positioniert und konfiguriert sein, dass mit seiner Hilfe Kräfte gemessen werden können, die von der Sonotrodenanordnung in einer Richtung ausgeübt werden, die parallel zu der Verlagerungsrichtung verläuft. Der Kraftsensor kann hierzu eine Kraftmessoberfläche haben, auf die Kräfte ausgeübt werden können. Abhängig von den ausgeübten Kräften kann der Kraftsensor dann ein Kraftmesssignal erzeugen. Der Kraftsensor kann beispielsweise mit seiner Kraftmessoberfläche in direktem oder indirektem Kontakt mit einer Oberfläche der Sonotrodenanordnung stehen. Insbesondere kann die Kraftmessoberfläche mit einer Mantelfläche der Sonotrodenanordnung, die sich parallel zu der Ausbreitungsrichtung der zu übertragenden Ultraschallschwingungen erstreckt, direkt oder indirekt über zwischenliegende Komponenten zusammenwirken.

Dabei ist darauf hinzuweisen, dass nicht notwendigerweise die gesamte von der Sonotrodenanordnung auf den Kraftsensor übertragene Kraft parallel zu der Verlagerungsrichtung gerichtet sein braucht. Stattdessen kann diese Gesamtkraft auch schräg zu der Verlagerungsrichtung verlaufen. Allerdings soll der Kraftsensor derart positioniert und konfiguriert sein, dass zumindest auch ein parallel zur Verlagerungsrichtung gerichteter Anteil einer solchen Gesamtkraft, d.h. eine Kraftkomponente, welche parallel zu der Verlagerungsrichtung gerichtet ist, einer solchen Gesamtkraft gemessen werden kann.

Die beschriebene Anordnung des Kraftsensors in dem Kontaktbereich angrenzend an die Nullpunktposition der Sonotrodenanordnung sowie die Art und Weise, wie mithilfe dieses Kraftsensors von der Sonotrodenanordnung übertragene Kräfte gemessen werden können, können verschiedene Vorteile ermöglichen.

Insbesondere wurde beobachtet, dass eine Messung der Kräfte, die von der Sonotrodenanordnung auf einen in deren Nullpunktposition angeordneten Kraftsensor ausgeübt werden, besonders genaue Rückschlüsse über die letztendlich von der Sonotrodenanordnung auf die Fügepartner ausgeübten Kräfte ermöglicht. Dies kann unter anderem daher resultieren, dass zwischen der Position, an der der Kraftsensor mit der Sonotrodenanordnung zusammenwirkt, und der Position, an der der Sonotrodenkopf mit den Fügepartnern zusammenwirkt, typischerweise keine oder wenig Reibungsverluste, Haftverluste aufgrund von Slip-Stick-Effekten, Verkantungen von Komponenten oder Ähnliches auftreten.

Ferner sind Abmessungen der Sonotrodenanordnung typischerweise sehr genau bekannt. Dementsprechend kann beispielsweise ein Abstand zwischen der Position, an der der Kraftsensor mit der Sonotrodenanordnung zusammenwirkt, und der Position, an der der Sonotrodenkopf mit den Fügepartnern zusammenwirkt, genau bekannt sein. Anhand der bekannten Abmessungen kann somit z.B. auf Hebelverhältnisse innerhalb der Ultraschallschweißeinrichtung rückgeschlossen werden. Dementsprechend können die von dem Kraftsensor ermittelten Kräfte mit hoher Genauigkeit in Kräfte, wie sie auf die Fügepartner ausgeübt werden, umgerechnet werden.

Ferner wurde erkannt, dass die Ultraschallschwingungen, die entlang der Längserstreckung der Sonotrodenanordnung übertragen werden und die den Sonotrodenkopf in der Schwingungsrichtung in Schwingung versetzen sollen, an der Nullpunktposition zwar in der Schwingungsrichtung minimal sind, dass aber an der Nullpunktposition durchaus erhebliche Schwingungen auftreten können, die in einer Richtung quer zu dieser Schwingungsrichtung oszillieren. Mit anderen Worten sind Longitudinalschwingungen oder Längsschwingungen, die entlang der Sonotrodenanordnung übertragen werden, an der Nullpunktposition minimal, hierzu senkrecht gerichtete Radialschwingungen oder Querschwingungen können jedoch an der Nullpunktposition ein erhebliches Maß erlangen. Solche Radialschwingungen könnten auch als Kontraktionsschwingungen bezeichnet werden, da sie aus einer periodischen Querkontraktion des Sonotrodenanordnung herrühren. Typischerweise schwingen die Radialschwingungen um 180° phasenverschoben zu den Longitudinalschwingungen. Ihre Amplitude ist üblicherweise deutlich geringer, d.h. beispielsweise nur in etwa ein Drittel, verglichen mit der Amplitude der Longitudinalschwingungen. Die Radialschwingungen sind dabei typischerweise weitgehend parallel zu der oben beschriebenen Verlagerungsrichtung der Verlagerungseinrichtung gerichtet und wirken somit als oszillierende Kraft auf den Kraftsensor, wobei die Kraft im Wesentlichen senkrecht zu der Kraftmessoberfläche des Kraftsensors gerichtet ist.

Da die Radialschwingungen mit den auf den Sonotrodenkopf zu übertragenden Ultraschallschwingungen korrelieren, können durch eine Messung der durch die Radialschwingungen bewirkten Kräfte Informationen über die von dem Sonotrodenkopf auf die Fügepartner übertragen Ultraschallschwingungen abgeleitet werden. Insbesondere können Informationen über Schwingungsfrequenzen, Schwingungsamplituden und/oder andere Schwingungseigenschaften abgeleitet werden. Beispielsweise ist typischerweise eine Frequenz der Radialschwingungen gleich derjenigen der auf die Fügepartner übertragenen Ultraschallschwingungen und eine Phase und/oder eine Amplitude der Radialschwingungen korreliert im Allgemeinen in vorbestimmter Weise mit den entsprechenden Größen der auf die Fügepartner übertragenen Ultraschallschwingungen. Diese Informationen können hilfreich bei einer Beeinflussung und/oder Bewertung eines mithilfe der Ultraschallschweißeinrichtung vorgenommenen Schweißvorgangs sein.

Es wurde ferner auch beobachtet, dass ein Kraftsensor, wenn er an oder nahe der Nullpunktposition der Sonotrodenanordnung angeordnet wird, verhältnismäßig wenig von den entlang der Sonotrodenanordnung zu übertragenden Ultraschallschwingungen belastet wird. Dies kann sich vorteilhaft auf von dem Kraftsensor einzuhaltende Spezifikationen und/oder auf eine Lebensdauer des Kraftsensors auswirken.

Gemäß der Erfindung soll sich der Kontaktbereich, an dem der Kraftsensor an der Sonotrodenanordnung angeordnet ist, derart angrenzend an die Nullpunktposition erstrecken, dass innerhalb des Kontaktbereichs ein Maximalabstand zu der Nullpunktposition kleiner als 20%, vorzugsweise kleiner als 10% oder kleiner als 5%, eines Abstandes zwischen der Nullpunktposition und einer geometrischen Mitte des Sonotrodenkopfs ist.

Es wurde erkannt, dass es sich vorteilhaft auswirken kann, wenn der Kraftsensor möglichst nahe bei der Nullpunktposition der Sonotrodenanordnung angeordnet wird. Insbesondere sollte die Position, an der der Kraftsensor mit der Sonotrodenanordnung zusammenwirkt, im Verhältnis zu sonstigen Abmessungen der Sonotrodenanordnung und insbesondere im Verhältnis zu dem Abstand zwischen der Nullpunktposition und dem Sonotrodenkopf, möglichst gering beabstandet zu der Nullpunktposition sein. Beispielsweise kann der laterale Abstand, gemessen in der Erstreckungsrichtung der Sonotrodenanordnung, zwischen einer geometrischen Mitte des Kraftsensors und der Nullpunktposition typischerweise kleiner als 20 mm, vorzugsweise kleiner als 10 mm sein. Dieser beispielhaft genannte Abstand bezieht sich hierbei auf eine Sonotrodenanordnung, welche beispielsweise für Ultraschallschwingungen im Bereich von 20 kHz ausgelegt ist und bei der ein lateraler Abstand zwischen der Mitte des Sonotrodenkopfs und der Nullpunktposition beispielsweise etwa zwischen 60mm und 70 mm betragen kann. Für höhere Frequenzen konzipierte Sonotrodenanordnungen sind typischerweise kürzer und der genannte Abstand somit kleiner zu wählen.

Hierdurch kann unter anderem erreicht werden, dass Schwingungen wie insbesondere Longitudinalschwingungen, die von der Sonotrodenanordnung auf den Kraftsensor in einer Richtung ausgeübt werden, in der der Kraftsensor im Regelfall wenig belastbar ist, geringgehalten werden. Außerdem kann erreicht werden, dass Schwingungen wie insbesondere Radialschwingungen, die von den Kraftsensor gut erfasst werden können und die eventuell einen Rückschluss auf die von der Sonotrodenanordnung zu übertragenden Ultraschallschwingungen ermöglichen, von dem Kraftsensor besonders gut gemessen werden können.

Beispielsweise kann der Kraftsensor in ein Nullpunktlager integriert sein, über das die Sonotrodenanordnung an ihrer Nullpunktposition abgestützt bzw. gelagert wird.

Gemäß einer Ausführungsform weist die Sonotrodenanordnung einen Schwingungsgeber und eine Sonotrode auf. Dabei ist der Kraftsensor in einem Kontaktbereich angrenzend an eine Nullpunktposition an der Sonotrode angeordnet.

Mit anderen Worten kann die Sonotrodenanordnung grob in zumindest zwei Teile untergliedert werden. Der Schwingungsgeber erzeugt hierbei die Ultraschallschwingungen beispielsweise mit einem Konverter und modifiziert diese gegebenenfalls mit einem Booster. Die erzeugten Ultraschallschwingungen werden dann auf die Sonotrode übertragen, wobei die Sonotrode zwischen einer Schnittstelle zu dem Schwingungsgeber und dem Sonotrodenkopf typischerweise einstückig ist. Sowohl an dem Schwingungsgeber, insbesondere an dessen optionalem Booster, als auch an der Sonotrode können hierbei ein oder mehrere Schwingungsknoten auftreten und somit ein oder mehrere Nullpunktpositionen existieren. Es wurde als vorteilhaft erkannt, den zur Kraftmessung einzusetzenden Kraftsensor nicht an einer Nullpunktposition des Schwingungsgebers, sondern einer Nullpunktposition an der Sonotrode anzuordnen. Für den Kraftsensor, der an einer solchen Nullpunktposition an der Sonotrode angeordnet ist, besteht über die typischerweise einstückige Sonotrode im Allgemeinen eine sehr direkte mechanische Kopplung mit dem Sonotrodenkopf. Auf Kräfte und/oder Schwingungen, die von dem Sonotrodenkopf auf dort angrenzende Fügepartner übertragen werden, kann somit anhand der von dem Kraftsensor detektierten Kräfte gut rückgeschlossen werden.

Gemäß einer Ausführungsform weist die Ultraschallschweißeinrichtung ferner ein Lagerelement auf, welches zwischen einer Kraftmessoberfläche des Kraftsensors und einer Oberfläche der Sonotrodenanordnung zwischengelagert ist, wobei das Lagerelement mit mindestens einer ersten Oberfläche die Kraftmessoberfläche des Kraftsensors kontaktiert und mit mindestens einer zweiten Oberfläche die Oberfläche der Sonotrodenanordnung kontaktiert.

Mit anderen Worten kann der Kraftsensor mit seiner Kraftmessoberfläche vorzugsweise nicht direkt an einer Oberfläche der Sonotrodenanordnung anliegen, sondern indirekt über ein zwischengelagertes Lagerelement mit dieser Oberfläche zusammenwirken. Das Lagerelement kann dazu konfiguriert sein, Schwingungen wie insbesondere Ultraschallschwingungen, die von der Sonotrodenanordnung auf das Lagerelement an dessen zweiter Oberfläche einwirken, an dessen entgegengesetzter erster Oberfläche in modifizierter Weise an die Kraftmessoberfläche des Kraftsensors weiterzugeben. Insbesondere kann das Lagerelement dazu konfiguriert sein, anliegende Ultraschallschwingungen hinsichtlich ihres Frequenzspektrums zu filtern und/oder hinsichtlich deren Amplitude zu reduzieren.

Hierdurch können unter anderem Überbelastungen an dem Kraftsensor vermieden werden. Andererseits kann, sofern die Elastizitätseigenschaften und/oder Dämpfungseigenschaften des Lagerelements ausreichend bekannt sind, anhand der Kräfte, die von dem Kraftsensor gemessenen werden und die gegebenenfalls oszillieren, dennoch ausreichend genau auf die in der Sonotrodenanordnung wirkenden Kräfte und/oder Schwingungen rückgeschlossen werden. Beispielsweise kann das Lagerelement aus einem Glasfaserverbundwerkstoff ausgebildet sein. Ein solches Lagerelement kann beispielsweise eine Druckfestigkeit senkrecht zu einer Schichtrichtung von ca. 500 MPa (gemessen nach ISO 604) und/oder eine Scherfestigkeit parallel zur Schichtrichtung von ca. 100 kJ/m² (gemessen nach VDE 0318/2) aufweisen. Es wird angemerkt, dass die hierin genannten Zahlenwerte lediglich beispielhaft und im Sinne einer Größenordnung zu verstehen sind. Das Lagerelement kann die Sonotrodenanordnung in dem Kontaktbereich angrenzend an die Nullpunktposition kontaktieren.

Gemäß einer Ausführungsform kann das Lagerelement elastischer sein als die Sonotrodenanordnung.

Mit anderen Worten kann das Lagerelement bzw. ein Material des Lagerelements ein geringeres Elastizitätsmodul aufweisen als die Sonotrodenanordnung und insbesondere deren Sonotrode bzw. deren jeweilige Materialien. Beispielsweise kann ein Elastizitätsmodul des Materials des Lagerelements etwa 22.000 MPa betragen, gemessen aus einem Biegeversuch und gemäß ISO 178 RT, wobei anzumerken ist, dass die hierin genannten Zahlenwerte lediglich beispielhaft und im Sinne einer Größenordnung zu verstehen sind. Dementsprechend kann sich das Lagerelement bei einer (quasi-)statischen Kraftbeaufschlagung durch die Sonotrodenanordnung zwar im Wesentlichen formstabil sein, hochfrequente Schwingungen können über das Lagerelement aber dennoch in einem gewissen Masse gefiltert übertragen werden.

Gemäß einer Ausführungsform ist der Kraftsensor derart angeordnet, dass der Kraftsensor bei Ausübung eines Drucks zwischen dem Sonotrodenkopf und dem Amboss von der Sonotrodenanordnung auf Druck belastet wird.

Mit anderen Worten soll der Kraftsensor an der Sonotrodenanordnung vorzugsweise derart angeordnet werden und mit dieser zusammenwirken, dass er bei den typischerweise im Betrieb der Ultraschallschweißeinrichtung auftretenden Kräften auf Druck belastet wird. Eine solche Druckbelastung ist in vielen Fällen einfacher und/oder präziser zu messen als eine entsprechende Zugbelastung. Die typischerweise bei dem Betrieb der Ultraschallschweißeinrichtung auftretenden Kräfte resultieren meist daraus, dass der Sonotrodenkopf und der Amboss von der Verlagerungseinrichtung aufeinander zu bewegt werden, um die dazwischen aufgenommenen Fügepartner zu kontaktieren und zumindest geringfügig zusammen zu pressen. Hierbei wird im Regelfall eine Kraft auf den Sonotrodenkopf ausgeübt, welche von dem Amboss weg gerichtet ist und welche sich über den daran angrenzenden Teil der Sonotrode bis hin zu dem an der Nullpunktposition der Sonotrode angeordneten Kraftsensor überträgt.

Wie vorangehend erläutert, können bei der hierin vorgeschlagenen Ultraschallschweißeinrichtung mithilfe des Kraftsensors Kräfte, die auf die Sonotrode wirken, ermittelt werden. Die ermittelten Kräfte lassen dann Rückschlüsse auf diejenigen Kräfte, die zwischen dem Sonotrodenkopf und dem Amboss auf die dort eingeschlossenen Fügepartner ausgeübt werden, zu. Insbesondere können auch oszillierend wirkende Kräfte ermittelt werden. Da die während eines Schweißvorgangs auf die Fügepartner wirkenden Kräfte und Schwingungen erheblichen Einfluss auf die Verschweißung dieser Fügepartner haben können, können die von dem Kraftsensor ermittelten Signale daher dazu genutzt werden, die Verschweißung der Fügepartner vorteilhaft zu beeinflussen.

Hierzu kann die Ultraschallschweißeinrichtung gemäß einer Ausführungsform ferner eine Regeleinrichtung aufweisen, welche dazu konfiguriert ist, Eigenschaften der Ultraschallschweißeinrichtung unter Berücksichtigung von Signalen des Kraftsensors zu regeln. Die Ultraschallschweißeinrichtung kann dann derart betrieben werden, dass Eigenschaften der Ultraschallschweißeinrichtung unter Berücksichtigung der von dem Kraftsensor ermittelten Kraft geregelt werden.

Anders ausgedrückt können die von dem Kraftsensor gelieferten Signale bzw. Kraftmessungen genutzt werden, um eine oder mehrere Eigenschaften der Ultraschallschweißeinrichtung nicht nur zu steuern sondern zu regeln.

Bei herkömmlichen Ultraschallschweißeinrichtungen werden Eigenschaften, die einen Schweißvorgang beeinflussen, im Allgemeinen lediglich von einer Steuerung gesteuert. Die Steuerung gibt hierbei Sollparameter vor, berücksichtigt jedoch nicht, ob sich die Eigenschaften der Ultraschallschweißeinrichtung tatsächlich gemäß diesen Sollparametern einstellen. Im Gegensatz hierzu soll bei der hier vorgeschlagenen Ultraschallschweißeinrichtung ermöglicht werden, dass die den Schweißvorgang beeinflussenden Eigenschaften unter Berücksichtigung der Signale von dem Kraftsensor geregelt werden, wobei diese Signale ausreichend zuverlässige und/oder präzise Informationen darüber liefern, welche Eigenschaften sich tatsächlich in der Ultraschallschweißeinrichtung einstellen und ob diese den Sollparametern in gewünschter Weise folgen.

Beispielsweise kann gemäß einer Ausführungsform die Regeleinrichtung dazu konfiguriert sein, eine mittels der Verlagerungseinrichtung zwischen der Sonotrodenanordnung und dem Amboss generierte Kraft unter Berücksichtigung der Signale des Kraftsensors zu regeln. Die Ultraschallschweißeinrichtung kann dann derart betrieben werden, dass eine Kraft, die mittels der Verlagerungseinrichtung zwischen der Sonotrodenanordnung und dem Amboss generiert wird, unter Berücksichtigung der von dem Kraftsensor ermittelten Kraft geregelt wird.

Anders ausgedrückt kann eine Kraft, mit der beispielsweise eine Mechanik, Hydraulik, Pneumatik, ein elektrischer Servoantrieb oder Ähnliches der Verlagerungseinrichtung die Sonotrodenanordnung und den Amboss aufeinander zu bewegt, nicht nur lediglich durch Vorgeben einer Sollkraft gesteuert werden, wie dies bei herkömmlichen Ultraschallschweißeinrichtungen üblicherweise der Fall ist. Stattdessen kann beim Einstellen dieser Kraft die von dem Kraftsensor ermittelte Kraft berücksichtigt werden. Während bei der herkömmlichen, lediglich gesteuert vorgegebenen Krafteinstellung nicht erkannt werden kann, welche Kräfte beim Verlagern der Verlagerungseinrichtung tatsächlich auf die Fügepartner bewirkt werden, können bei einem Berücksichtigen der von dem Kraftsensor ermittelten Kräfte Rückschlüsse auf die tatsächlich auf die Fügepartner wirkenden Kräfte gezogen werden. Demgemäß kann die Verlagerungseinrichtung von der Regeleinrichtung in geeigneter Weise geregelt werden, sodass diese tatsächlich wirkenden Kräfte gemäß Sollvorgaben eingestellt werden können. Beispielsweise kann eine von der Verlagerungseinrichtung eingestellte Relativposition zwischen dem Sonotrodenkopf und dem Amboss und eine hierdurch bewirkte Kraft auf die Fügepartner nachgeregelt werden, wenn diese sich zum Beispiel während eines Schweißvorgangs in ungewollter Weise ändern sollte, beispielsweise aufgrund sich lösender Slip-Stick-Effekte und/oder Verkantungen.

Gemäß einer weiteren Ausführungsform kann die Regeleinrichtung dazu konfiguriert sein, eine Ultraschallerzeugung in der Sonotrodenanordnung unter Berücksichtigung der Signale des Kraftsensors zu regeln. Die Ultraschallschweißeinrichtung kann dann derart betrieben werden, dass die Ultraschallerzeugung in der Sonotrodenanordnung unter Berücksichtigung der von dem Kraftsensor ermittelten zeitlich variierenden Kraft geregelt wird.

Mit anderen Worten kann aufgrund der mit dem Kraftsensor generierten Signale und der durch diese repräsentierten ermittelten Kraft darauf rückgeschlossen werden, welche Kräfte während des Schweißvorgangs tatsächlich auf die Fügepartner wirken. Dabei kann eine zeitliche Auflösung von Änderungen in diesem Kraftverlauf ausreichend hoch sein, um Rückschlüsse auf die dabei auf die Fügepartner übertragenen Ultraschallschwingungen zuzulassen. Diese Ultraschallschwingungen an den Fügepartnern können sich abhängig von den ausgeübten Kräften und/oder abhängig von den von dem Schwingungsgeber erzeugten Ultraschallschwingungen während eines Schweißvorgangs verändern. Insbesondere können die gemessenen Kräfte aus den weiter oben geschilderten Radialschwingungen der Sonotrodenanordnung an deren Nullpunktposition herrühren und somit im Ultraschallfrequenzbereich zeitlich variieren. Solche Änderungen können aufgrund der Kraftmessung durch den Kraftsensor erkannt werden, sodass basierend auf den Signalen des Kraftsensors eine Rückkopplung an die Regeleinrichtung übermittelt werden kann. Darauf basierend kann die Regeleinrichtung dann die Erzeugung der Ultraschallschwingungen regeln, beispielsweise indem Steuersignale an den Schwingungsgeber geeignet angepasst werden. Hierdurch können Einflussfaktoren, die ein Ergebnis des Schweißvorgangs beeinflussen, wie beispielsweise eine Schwingungsfrequenz und/oder eine Schwingungsamplitude, vorteilhaft modifiziert und möglichst optimiert werden.

Gemäß einer weiteren Ausführungsform kann die Ultraschallschweißeinrichtung ferner eine Überwachungseinrichtung aufweisen, welche dazu konfiguriert ist, basierend auf Signalen des Kraftsensors Informationen über einen aktuellen Zustand der Ultraschallschweißeinrichtung zu ermitteln. Die Ultraschallschweißeinrichtung kann hierbei derart betrieben werden, dass Informationen über ihren aktuellen Zustand unter Berücksichtigung der von dem Kraftsensor ermittelten Kraft ermittelt und ausgegeben werden.

Hierbei kann unter anderem genutzt werden, dass beobachtet wurde, dass die von dem Kraftsensor gemessenen Kräfte und insbesondere ein zeitlicher Verlauf dieser Kräfte Rückschlüsse über den aktuellen Zustand der Ultraschallschweißeinrichtung zulassen. Beispielsweise kann eine Art und Weise, wie sich der von dem Kraftsensor gemessene Kraftverlauf verhält, während die Sonotrode und der Amboss von der Verlagerungseinrichtung aufeinander zu bewegt werden und dabei die Fügepartner zwischen sich einspannen, einen Hinweis auf aktuelle physikalische Eigenschaften innerhalb der Ultraschallschweißeinrichtung geben. Zum Beispiel können abrupte Veränderungen bzw. Sprünge innerhalb dieses Kraftverlaufs auf den mechanischen Zustand der Ultraschallschweißeinrichtung hinweisen. Dementsprechende Informationen über den aktuellen Zustand der Ultraschallschweißeinrichtung können beispielsweise als Signale an andere interne oder externe Komponenten ausgegeben bzw. weitergeleitet werden, um beispielsweise den Betrieb der Ultraschallschweißeinrichtung darauf basierend anpassen zu können und/oder um beispielsweise bei einem mangelbehafteten Zustand für entsprechende Abhilfe sorgen zu können.

Es wird darauf hingewiesen, dass hierin mögliche Merkmale und Vorteile von Ausführungsformen der Erfindung teils mit Bezug auf eine Ultraschallschweißeinrichtung und teils mit Bezug auf ein Betriebsverfahren für eine Ultraschallschweißeinrichtung beschrieben sind. Ein Fachmann wird erkennen, dass die für einzelne Ausführungsformen beschriebenen Merkmale in analoger und geeigneter Weise auf andere Ausführungsformen übertragen, angepasst und/oder ausgetauscht werden können, um zu weiteren Ausführungsformen der Erfindung und möglicherweise zu Synergieeffekten zu gelangen.

### KURZE BESCHREIBUNG DER ZEICHNUNGEN

Nachfolgend werden vorteilhafte Ausführungsformen der Erfindung unter Bezugnahme auf die beigefügten Zeichnungen weiter erläutert, wobei weder die Zeichnungen noch die Erläuterungen als die Erfindung in irgendeiner Weise einschränkend auszulegen sind.
Figur 1 zeigt eine schematische Darstellung einer Ultraschallschweißeinrichtung gemäß einem Ausführungsbeispiel der Erfindung.
Figur 2 zeigt eine detailliertere Querschnittsansicht durch Komponenten der Ultraschallschweißeinrichtung aus Figur 1.
Figur 3 zeigt einen beispielhaften Verlauf eines Kraftverlaufs, wie er in einer erfindungsgemäßen Ultraschallschweißeinrichtung ermittelt werden kann.

Die Figuren sind lediglich schematisch und nicht maßstabsgetreu. Gleiche Bezugszeichen bezeichnen in den verschiedenen Zeichnungen gleiche bzw. gleichwirkende Merkmale.

### BESCHREIBUNG VON VORTEILHAFTEN AUSFÜHRUNGSFORMEN

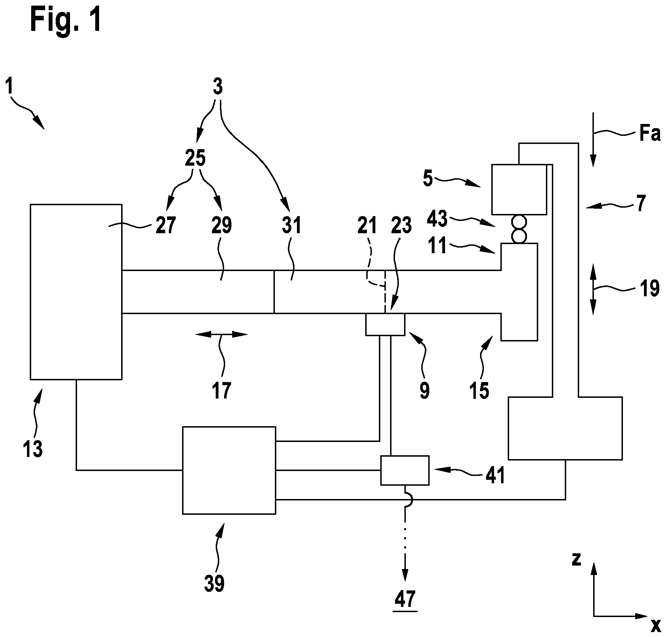

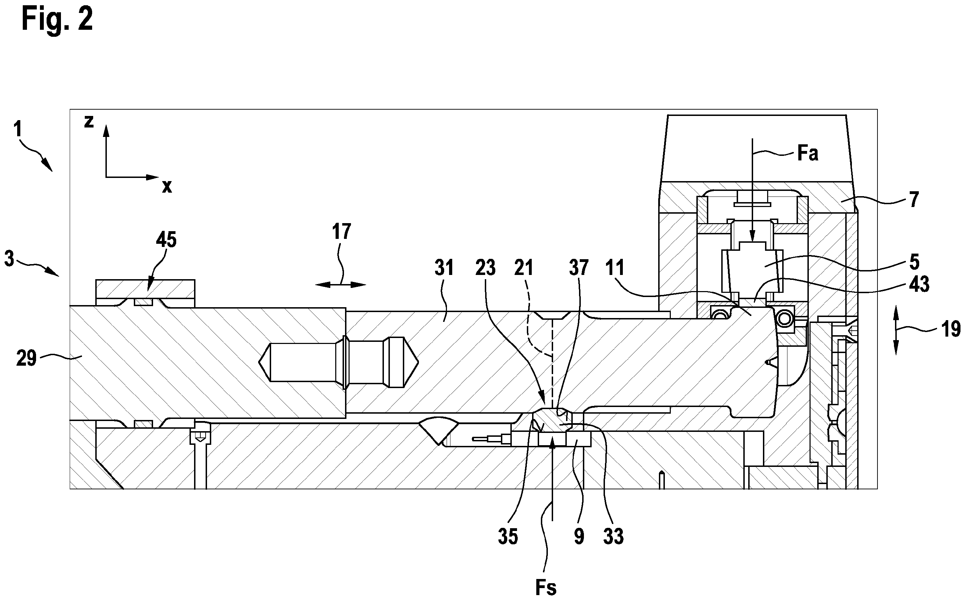

Figur 1 zeigt eine stark schematisierte Darstellung einer Ausführungsform einer Ultraschallschweißeinrichtung 1. In Figur 2 sind einige Einzelheiten der Ultraschallschweißeinrichtung 1 dargestellt.

Die Ultraschallschweißeinrichtung 1 verfügt über eine Sonotrodenanordnung 3, einen Amboss 5, eine Verlagerungseinrichtung 7 und einen Kraftsensor 9. Die Sonotrodenanordnung 3 verfügt in einem proximalen Bereich 13 über einen Schwingungsgeber 25 mit einem Konverter 27 und einem Booster 29, um Ultraschallschwingungen in einer Schwingungsrichtung 17, welche hierin als x-Richtung bezeichnet wird, zu erzeugen. Im dargestellten Beispiel werden Longitudinalschwingungen erzeugt, das heißt die Schwingungsrichtung 17 ist im Wesentlichen parallel zu einer Längserstreckung der Sonotrodenanordnung 3. Die Sonotrodenanordnung 3 verfügt ferner über eine Sonotrode 31, welche in einem distalen Bereich 15 einen Sonotrodenkopf 11 aufweist. Um Reaktionskräfte aufnehmen zu können, ist die Sonotrodenanordnung 3 sowohl an einem Nullpunktlager 45 am Booster 29 gelagert als auch an einer Nullpunktposition 21 an der Sonotrode 31 abgestützt.

Der Amboss 5 befindet sich oberhalb des Sonotrodenkopfs 11. Zwischen dem Amboss 5 und dem Sonotrodenkopf 11 können Fügepartner 43, beispielsweise in Form zweier oder mehrerer Litzen oder Kabel, aufgenommen werden.

Mithilfe der Verlagerungseinrichtung 7 können der Amboss 5 und die Sonotrodenanordnung 3 mit ihrem Sonotrodenkopf 11 in einer Verlagerungsrichtung 19 relativ zueinander bewegt werden. Die Verlagerungsrichtung 19 wird hierin als z-Richtung bezeichnet. Im dargestellten Beispiel kann die Verlagerungseinrichtung 7 als Ambossantrieb ausgestaltet sein und beispielsweise über einen Servoantrieb oder einen Pneumatikzylinder verfügen, um den Amboss 5 mit einer Kraft Fa zu bewegen.

Die Kraft Fa kann gegebenenfalls gemessen werden. Es wurde jedoch beobachtet, dass die von der Verlagerungseinrichtung 7 bewirkte Kraft Fa nicht notwendigerweise derjenigen Kraft entspricht, die an der Sonotrode 31 ankommt bzw. die auf die Fügepartner 43 wirkt. Es können Kraftverluste beispielsweise aufgrund von Reibung und Schall auftreten, welche durch die Messung der Kraft Fa nicht erkannt werden können. Anders ausgedrückt kann die Antriebskraft Fa der Verlagerungseinrichtung 7 beispielsweise durch Reibungen in Führungen und/oder dem Schweißgut beeinflusst werden. Des Weiteren wurde beobachtet, dass im Allgemeinen kein sicherer Bezug zwischen Amplitude, Frequenz und Kraft zu erkennen ist und dieser somit nicht zuverlässig berücksichtigt werden kann.

Um die auf die Fügepartner 43 tatsächlich wirkenden Kräfte und möglicherweise auch die auf die Fügepartner 43 ausgeübten Ultraschallschwingungen besser ermitteln zu können, verfügt die Ultraschallschweißeinrichtung 1 über den Kraftsensor 9. Der Kraftsensor 9 ist in einem Kontaktbereich 23 angrenzend an die Nullpunktposition 21 der Sonotrode 31 positioniert. Dabei ist der Kraftsensor 9 dazu konfiguriert, Kräfte Fs messen zu können, welche von der Sonotrode 31 der Sonotrodenanordnung 3 auf ihn ausgeübt werden. Diese Kräfte Fs wirken dabei zumindest mit einer ihrer Kraftkomponenten in einer Richtung parallel zu der Verlagerungsrichtung 19, in der die Sonotrode 31 indirekt über den Amboss 5 von der Verlagerungseinrichtung 7 aufgrund der dort ausgeübten Kräfte Fa kraftbeaufschlagt wird.

Der derart angeordnete und konfigurierte Kraftsensor 9 erfasst somit Kräfte Fs bzw. einen zeitlichen Verlauf solcher Kräfte Fs, welche deutlich direkter mit den auf die Fügepartner 43 wirkenden Kräften bzw. dem zugehörigen Kraftverlauf korrelieren, als dies bei den an der Verlagerungseinrichtung 7 gemessenen Kräften Fa der Fall ist.

Der Kraftsensor 9 ist innerhalb des Kontaktbereichs 23 in der Nähe der Nullpunktposition 21 der Sonotrode 31 angeordnet. Dieser Kontaktbereich 23 ist derart dimensioniert, dass der Kraftsensor 9 ausreichend nahe bei der Nullpunktposition 21 ist. Somit wird der Kraftsensor 9 kaum durch Longitudinalschwingungen belastet, da diese an der Nullpunktposition 21 minimal sind. Andererseits kann der Kraftsensor 9 aufgrund von Radialschwingungen innerhalb der Sonotrode 31 kraftbeaufschlagt werden. Solche Radialschwingungen entstehen als Querkontraktionen insbesondere an der Nullpunktposition 21 aufgrund von mit den Longitudinalschwingungen korrelierenden und zeitlich variierenden lokalen Kompressionen innerhalb der Sonotrode 31, sodass die Sonotrode 31 im Bereich der Nullpunktposition 21 mit ihrer Mantelfläche zu "pumpen" scheint.

Mithilfe des Kraftsensors 9 können somit die auf die Sonotrode 31 an deren Nullpunktposition 21 wirkenden Kräfte mit hoher Genauigkeit ermittelt werden. Zwischen diesen Kräften und den tatsächlich auf die Fügepartner 43 wirkenden Kräften besteht im Allgemeinen eine direkte Korrelation. Außerdem kann der zeitliche Verlauf dieser Kräfte aufgenommen werden. Dementsprechend kann insbesondere die Querkontraktion der Sonotrode 31 in deren Nullpunkt ermittelt werden und daraus Informationen über die Longitudinalschwingungen durch die Sonotrodenanordnung 3, insbesondere deren Frequenz, Amplitude und/oder Phase, abgeleitet werden. Die ermittelten Informationen können zur Regelung und/oder Überwachung der Ultraschallschweißeinrichtung 1 genutzt werden.

Zwischen einer Kraftmessoberfläche 35 des Kraftsensors 9 und einer gegenüberliegenden Oberfläche 37 der Sonotrode 31 ist ein Lagerelement 33 zwischengelagert. Das Lagerelement 33 soll den Kraftsensor 9 unter anderem gegen Überbelastungen, insbesondere gegen Überbelastungen aufgrund von übertragenen Longitudinalschwingungen und/oder übermäßigen Radialschwingungen von der Sonotrode 31, schützen. Hierdurch kann eine ausreichende Lebensdauer für den Kraftsensor 9 erreicht werden.

Andererseits soll das Lagerelement 33 derart ausgestaltet sein, dass es die zu messenden Kräfte Fs und deren zeitlichen Verlauf nicht übermäßig stark beeinflusst, sodass zum Beispiel deren Amplitude und/oder Phase noch ausreichend genau mit den zugehörigen Parametern, wie sie in der Sonotrode 31 herrschen, korrelieren.

Der Kraftsensor 9 und das Lagerelement 33 können einerseits an einem Gehäuse der Ultraschallschweißeinrichtung 1 abgestützt sein und andererseits die Sonotrode 31 an ihrer Nullpunktposition 21 abstützen. Insgesamt kann somit über den Kraftsensor 9 und das Lagerelement 33 eine Art Nullpunktlager für die Sonotrode 31 gebildet werden, wobei dort herrschende Kräfte Fs von dem Kraftsensor 9 ermittelt werden können.

Signale, welche von dem Kraftsensor 9 in Reaktion auf die ermittelten Kräfte Fs generiert werden, können dann einer Regeleinrichtung 39 und/oder einer Überwachungseinrichtung 41 zugeführt werden.

Die Regeleinrichtung 39 kann basierend auf diesen Signalen Eigenschaften und/oder Funktionen der Ultraschallschweißeinrichtung 1 gezielt regeln.

Beispielsweise können die mittels der Verlagerungseinrichtung 7 zwischen der Sonotrode 31 und dem Amboss 5 generierten Kräfte Fa unter Berücksichtigung der Signale des Kraftsensors 9 geregelt werden. Damit können die tatsächlich auf die Fügepartner 43 wirkenden Kräfte besser eingestellt werden, als dies bei herkömmlichen Ultraschallschweißeinrichtungen der Fall war.

Ferner kann die Regeleinrichtung 39 die Signale des Kraftsensors 9 nutzen, um den Konverter 27 der Sonotrodenanordnung 3 in geeigneter Weise zu regeln, um eine gewünschte Ultraschallerzeugung in der Sonotrodenanordnung 3 zu bewirken.

Die Überwachungseinrichtung 41 kann die von dem Kraftsensor 9 erhaltenen Signale dazu nutzen, Informationen über einen aktuellen Zustand der Ultraschallschweißeinrichtung 1 zu ermitteln. Beispielsweise können abrupte Veränderungen im Verlauf der gemessenen Kraft Fs, d.h. Kraftsprünge, beispielsweise bei einem Einschalten oder Ausschalten der Erzeugung der Ultraschallschwingungen einen Rückschluss auf einen aktuellen mechanischen Zustand der Ultraschallschweißeinrichtung 1 und ihrer Komponenten ermöglichen.

Die Überwachungseinrichtung 41 kann die Information über den aktuellen Zustand der Ultraschallschweißeinrichtung 1 beispielsweise an die Regeleinrichtung 39 weiterleiten, sodass diese dort berücksichtigt werden kann. Alternativ oder ergänzend können solche Informationen auch an andere interne oder externe Komponenten 47 weitergeleitet werden. Beispielsweise können die Informationen auf einer Anzeige dargestellt werden, um es einem Techniker zu ermöglichen, Fehlfunktionen oder Verschleißerscheinungen zu erkennen und entsprechende Gegenmaßnahmen einzuleiten.

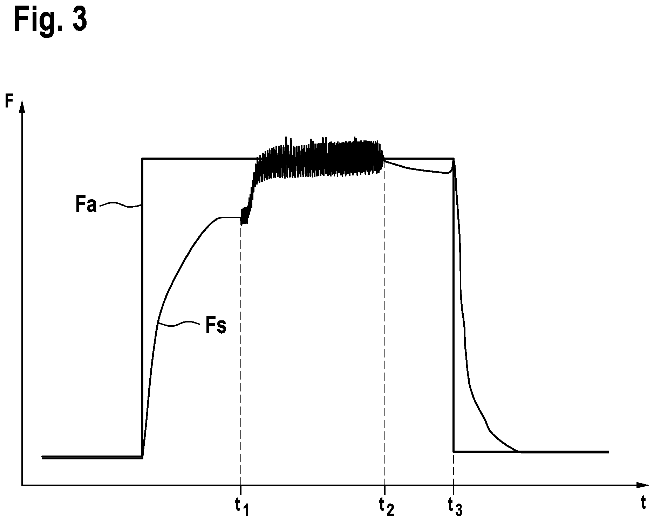

Figur 3 zeigt beispielhaft einen Verlauf einer Kraft F in Abhängigkeit von der Zeit t. Es wird einerseits die direkt an der Verlagerungseinrichtung 7 gemessene Kraft Fa und andererseits die von dem Kraftsensor 9 ermittelte Kraft Fs dargestellt.

Wie deutlich zu erkennen, unterscheiden sich die zeitlichen Verläufe der beiden Kräfte Fa und Fs signifikant. Die an der Verlagerungseinrichtung 7 bewirkte Kraft Fa folgt einem Steuersignal und hat einen im Wesentlichen rechteckförmigen Verlauf.

Die daraufhin auf die Sonotrode 31 wirkende Kraft Fs, und somit auch die im Wesentlichen auf die Fügepartner 43 wirkende Kraft, können sich von einem solchen rechteckförmigen Verlauf jedoch erheblich unterscheiden. Anfänglich nimmt diese Kraft Fs zunächst stark zu, scheint dann jedoch einen Maximalwert zu erreichen.

Sobald zu einem Zeitpunkt t1 die Erzeugung der Ultraschallschwingungen gestartet wird, nimmt die gemessene Kraft Fs nochmals kurzfristig zu. Es wird vermutet, dass dies daraus resultiert, dass sich zuvor bestehende Verkantungen, Anhaftungen oder Ähnliches unter dem Einfluss der Ultraschallschwingungen lösen können. Es ist ferner zu erkennen, dass die gemessene Kraft Fs den Ultraschallschwingungen folgend oszilliert, wobei Oszillationsparameter wie eine Schwingungsfrequenz, eine Schwingungsamplitude und/oder eine Schwingungsphase mit den in der Sonotrode 31 herrschenden Ultraschallschwingungen zu korrelieren scheint.

Wenn zu einem Zeitpunkt t2 die Erzeugung der Ultraschallschwingungen beendet wird, nimmt die gemessene Kraft Fs langsam ab.

Ab einem Zeitpunkt t3 nimmt dann die gemessene Kraft wieder stark ab und erreicht letztendlich im Wesentlichen das Niveau, welches vor dem Ultraschallschweißvorgang herrschte.

Mit der hierin beschriebenen Ultraschallschweißeinrichtung 1 und der Art und Weise, wie diese regelnd betrieben werden kann, kann eine Verbesserung von Ultraschallschweißprozessen erreicht werden, insbesondere bei schwierig zu schweißenden Fügepartnern oder verschmutzten Fügepartnern. Potenziell fehlerhafte Schweißverbindungen können vermieden und/oder erkannt werden.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

### Bezugszeichenliste

- 1: Ultraschallschweißeinrichtung
- 3: Sonotrodenanordnung
- 5: Amboss
- 7: Verlagerungseinrichtung
- 9: Kraftsensor
- 11: Sonotrodenkopf
- 13: proximaler Bereich
- 15: distaler Bereich
- 17: Schwingungsrichtung
- 19: Verlagerungsrichtung
- 21: Nullpunktposition
- 23: Kontaktbereich
- 25: Schwingungsgeber
- 27: Konverter
- 29: Booster
- 31: Sonotrode
- 33: Lagerelement
- 35: Kraftmessoberfläche
- 37: Oberfläche der Sonotrodenanordnung
- 39: Regeleinrichtung
- 41: Überwachungseinrichtung
- 43: Fügepartner
- 45: Nullpunktlager des Boosters
- 47: externe Komponente

- Fa: Kraft durch die Verlagerungseinrichtung
- Fs: Kraft auf Kraftsensor

- x: x-Richtung
- z: z-Richtung

## Patentansprüche

1. Ultraschallschweißeinrichtung (1) aufweisend:
eine Sonotrodenanordnung (3),
einen Amboss (5),
eine Verlagerungseinrichtung (7), und
einen Kraftsensor (9),
wobei die Sonotrodenanordnung (3) einen Sonotrodenkopf (11) aufweist,
wobei die Sonotrodenanordnung (3) dazu konfiguriert ist, Ultraschallschwingungen,
welche an der Sonotrodenanordnung in einem Bereich (13) entfernt von dem Sonotrodenkopf erzeugt werden, an den Sonotrodenkopf (11) so zu übertragen, dass der Sonotrodenkopf (11) in einer Schwingungsrichtung (17) der Sonotrodenanordnung (3) schwingt und dass die Sonotrodenanordnung (3) an einer Nullpunktposition (21),
welche von dem Sonotrodenkopf bezogen auf die Schwingungsrichtung (17) beabstandet angeordnet ist, in der Schwingungsrichtung (17) minimal schwingt,
wobei die Verlagerungseinrichtung (7) dazu konfiguriert ist, die Sonotrodenanordnung (3) und den Amboss (5) in einer Verlagerungsrichtung (19) relativ zueinander zu verlagern,
wobei der Kraftsensor (9) derart in einem Kontaktbereich (23) angrenzend an die Nullpunktposition (21) positioniert und konfiguriert ist, dass mithilfe des Kraftsensors (9) Kräfte (Fs) messbar sind, welche von der Sonotrodenanordnung (3) parallel zu der Verlagerungsrichtung (19) auf den Kraftsensor (9) ausgeübt werden,
**dadurch gekennzeichnet, dass** innerhalb des Kontaktbereichs (23) ein Maximalabstand zu der Nullpunktposition (21) kleiner als 20% eines Abstandes zwischen der Nullpunktposition (21) und einer geometrischen Mitte des Sonotrodenkopfs (11) ist.

2. Ultraschallschweißeinrichtung nach Anspruch 1,
wobei die Sonotrodenanordnung (3) einen Schwingungsgeber (25) und eine Sonotrode (31) aufweist und wobei der Kraftsensor (9) in einem Kontaktbereich (23) angrenzend an eine Nullpunktposition (21) an der Sonotrode (31) angeordnet ist.

3. Ultraschallschweißeinrichtung nach einem der vorhergehenden Ansprüche, ferner aufweisend ein Lagerelement (33), welches zwischen einer Kraftmessoberfläche (35) des Kraftsensors (9) und einer Oberfläche (37) der Sonotrodenanordnung (3) zwischengelagert ist, wobei das Lagerelement (33) mit einer ersten Oberfläche die Kraftmessoberfläche (35) des Kraftsensors (9) kontaktiert und mit einer zweiten Oberfläche die Oberfläche (37) der Sonotrodenanordnung (3) kontaktiert.

4. Ultraschallschweißeinrichtung nach Anspruch 3,
wobei das Lagerelement (33) elastischer ist als die Sonotrodenanordnung (3).

5. Ultraschallschweißeinrichtung nach einem der vorhergehenden Ansprüche, wobei der Kraftsensor (9) derart angeordnet ist, dass bei Ausübung eines Drucks zwischen dem Sonotrodenkopf (11) und dem Amboss (5) der Kraftsensor (9) von der Sonotrodenanordnung (3) auf Druck belastet wird.

6. Ultraschallschweißeinrichtung nach einem der vorhergehenden Ansprüche, ferner aufweisend eine Regeleinrichtung (39), welche dazu konfiguriert ist, Eigenschaften der Ultraschallschweißeinrichtung (1) unter Berücksichtigung von Signalen des Kraftsensors (9) zu regeln.

7. Ultraschallschweißeinrichtung nach Anspruch 6,
wobei die Regeleinrichtung (39) dazu konfiguriert ist, eine mittels der Verlagerungseinrichtung (7) zwischen der Sonotrodenanordnung (3) und dem Amboss (5) generierte Kraft (Fa) unter Berücksichtigung der Signale des Kraftsensors (9) zu regeln.

8. Ultraschallschweißeinrichtung nach einem der Ansprüche 6 und 7,
wobei die Regeleinrichtung (39) dazu konfiguriert ist, eine Ultraschallerzeugung in der Sonotrodenanordnung (3) unter Berücksichtigung der Signale des Kraftsensors (9) zu regeln.

9. Ultraschallschweißeinrichtung nach einem der vorhergehenden Ansprüche, ferner aufweisend eine Überwachungseinrichtung (41), welche dazu konfiguriert ist, basierend auf Signalen des Kraftsensors (9) Informationen über einen aktuellen Zustand der Ultraschallschweißeinrichtung (1) zu ermitteln.

10. Verfahren zum Betreiben einer Ultraschallschweißeinrichtung (1) gemäß einem der vorhergehenden Ansprüche, wobei das Verfahren umfasst:
Ermitteln einer von der Sonotrodenanordnung (3) auf den Kraftsensor (9) ausgeübten Kraft (Fs),
Betreiben der Ultraschallschweißeinrichtung (1) unter Berücksichtigung der ermittelten Kraft (Fs).

11. Verfahren nach Anspruch 10,
ferner umfassend:
Regeln von Eigenschaften der Ultraschallschweißeinrichtung (1) unter Berücksichtigung der ermittelten zeitlich variierenden Kraft (Fs).

12. Verfahren nach einem der Ansprüche 10 und 11,
ferner umfassend:
Regeln einer mittels der Verlagerungseinrichtung (7) zwischen der Sonotrodenanordnung (3) und dem Amboss (5) generierten Kraft (Fa) unter Berücksichtigung der ermittelten Kraft (Fs).

13. Verfahren nach einem der Ansprüche 10 bis 12,
ferner umfassend:
Regeln einer Ultraschallerzeugung in der Sonotrodenanordnung (3) unter Berücksichtigung der ermittelten Kraft (Fs).

14. Verfahren nach einem der Ansprüche 10 bis 13,
ferner umfassend:
Ermitteln und Ausgeben von Informationen über einen aktuellen Zustand der Ultraschallschweißeinrichtung (1) unter Berücksichtigung der ermittelten Kraft (Fs).

## Claims

1. Ultrasonic welding device (1), comprising:
a sonotrode arrangement (3),
an anvil (5),
a displacement device (7), and
a force sensor (9),
wherein the sonotrode arrangement (3) comprises a sonotrode head (11),
wherein the sonotrode arrangement (3) is configured to transmit ultrasonic vibrations, which are generated at the sonotrode arrangement in a region (13) remote from the sonotrode head, to the sonotrode head (11) such that the sonotrode head (11) vibrates in a vibration direction (17) of the sonotrode arrangement (3) and that the sonotrode arrangement (3) vibrates minimally in the vibration direction (17) at a zero-point position (21) which is arranged spaced apart from the sonotrode head, based on the vibration direction (17),
wherein the displacement device (7) is configured to displace the sonotrode arrangement (3) and the anvil (5) relative to one another in a displacement direction (19),
wherein the force sensor (9) is positioned in a contact region (23) adjacent to the zero-point position (21) and is configured in such a manner that, with the aid of the force sensor (9), forces (Fs) which are exerted by the sonotrode arrangement (3) on the force sensor (9) parallel to the displacement direction (19) may be measured,
**characterized in that**,
within the contact region (23), a maximum distance to the zero-point position (21) is less than 20% of a distance between the zero-point position (21) and a geometric center of the sonotrode head (11).

2. Ultrasonic welding device as claimed in one of claims 1 and 2,
wherein the sonotrode arrangement (3) comprises a vibration generator (25) and a sonotrode (31), and wherein the force sensor (9) is arranged on the sonotrode (31) in a contact region (23) adjacent to a zero-point position (21).

3. Ultrasonic welding device as claimed in any one of the preceding claims,
further comprising a bearing element (33) which is interposed between a force-measuring surface (35) of the force sensor (9) and a surface (37) of the sonotrode arrangement (3), wherein the bearing element (33) contacts the force-measuring surface (35) of the force sensor (9) with a first surface and contacts the surface (37) of the sonotrode arrangement (3) with a second surface.

4. Ultrasonic welding device as claimed in claim 3,
wherein the bearing element (33) is more elastic than the sonotrode arrangement (3).

5. Ultrasonic welding device as claimed in any one of the preceding claims,
wherein the force sensor (9) is arranged in such a manner that, when a pressure is exerted between the sonotrode head (11) and the anvil (5), the force sensor (9) is subjected to pressure by the sonotrode arrangement (3).

6. Ultrasonic welding device as claimed in any one of the preceding claims,
further comprising a closed-loop control device (39) which is configured to regulate properties of the ultrasonic welding device (1) taking account of signals of the force sensor (9).

7. Ultrasonic welding device as claimed in claim 6,
wherein the closed-loop control device (39) is configured to regulate a force (Fa) generated by means of the displacement device (7) between the sonotrode arrangement (3) and the anvil (5) taking account of the signals of the force sensor (9).

8. Ultrasonic welding device as claimed in one of claims 6 and 7,
wherein the closed-loop control device (39) is configured to regulate ultrasound generation in the sonotrode arrangement (3) taking account of the signals of the force sensor (9).

9. Ultrasonic welding device as claimed in any one of the preceding claims,
further comprising a monitoring device (41) which is configured to determine information about a current state of the ultrasonic welding device (1) on the basis of signals of the force sensor (9).

10. Method for operating an ultrasonic welding device (1) as claimed in any one of the preceding claims, wherein the method comprises:
determining a force (Fs) exerted by the sonotrode arrangement (3) on the force sensor (9),
operating the ultrasonic welding device (1) taking account of the determined force (Fs).

11. Method as claimed in claim 10,
further comprising:
regulating properties of the ultrasonic welding device (1) taking account of the determined time-varying force (Fs).

12. Method as claimed in one of claims 10 and 11,
further comprising:
regulating a force (Fa) generated by means of the displacement device (7) between the sonotrode arrangement (3) and the anvil (5) taking account of the determined force (Fs).

13. Method as claimed in any one of claims 10 to 12,
further comprising:
regulating ultrasound generation in the sonotrode arrangement (3) taking account of the determined force (Fs).

14. Method as claimed in any one of claims 10 to 13,
further comprising:
determining and outputting information about a current state of the ultrasonic welding device (1) taking account of the determined force (Fs).

## Revendications

1. Dispositif de soudage par ultrasons (1) comportant :
un ensemble de sonotrode (3),
une enclume (5),
un dispositif de déplacement (7), et
un capteur de force (9),
dans lequel l'ensemble de sonotrode (3) comporte une tête de sonotrode (11),
dans lequel l'ensemble de sonotrode (3) est configuré pour transmettre à la tête de sonotrode (11) des vibrations ultrasonores qui sont générées sur l'ensemble de sonotrode dans une zone (13) éloignée de la tête de sonotrode, de telle sorte que la tête de sonotrode (11) vibre dans une direction de vibration (17) de l'ensemble de sonotrode (3) et que l'ensemble de sonotrode (3) vibre de manière minimale dans la direction de vibration (17) à une position de point zéro (21) qui est espacée de la tête de sonotrode par rapport à la direction de vibration (17),
dans lequel le dispositif de déplacement (7) est configuré de manière à déplacer l'ensemble de sonotrode (3) et l'enclume (5) l'un par rapport à l'autre dans une direction de déplacement (19),
dans lequel le capteur de force (9) est positionné et configuré dans une zone de contact (23) adjacente à la position de point zéro (21), de telle sorte que des forces (Fs) peuvent être mesurées au moyen du capteur de force (9), lesquelles forces sont exercées sur le capteur de force (9) par l'ensemble de sonotrode (3) parallèlement à la direction de déplacement (19),
**caractérisé en ce qu'**une distance maximale par rapport à la position de point zéro (21) dans la zone de contact (23) est inférieure à 20 % d'une distance entre la position de point zéro (21) et un centre géométrique de la tête de sonotrode (11).

2. Dispositif de soudage par ultrasons selon la revendication 1,
dans lequel l'ensemble de sonotrode (3) comporte un transducteur de vibration (25) et une sonotrode (31) et dans lequel le capteur de force (9) est agencé sur la sonotrode (31) dans une zone de contact (23) adjacente à une position de point zéro (21).

3. Dispositif de soudage par ultrasons selon l'une des revendications précédentes, comportant en outre un élément de palier (33) qui est monté entre une surface de mesure de force (35) du capteur de force (9) et une surface (37) de l'ensemble de sonotrode (3), dans lequel une première surface de l'élément de palier (33) est en contact avec la surface de mesure de force (35) du capteur de force (9) et une seconde surface de l'élément de palier (33) est en contact avec la surface (37) de l'ensemble de sonotrode (3) .

4. Dispositif de soudage par ultrasons selon la revendication 3,
dans lequel l'élément de palier (33) est plus élastique que l'ensemble de sonotrode (3).

5. Dispositif de soudage par ultrasons selon l'une des revendications précédentes, dans lequel le capteur de force (9) est agencé de telle sorte que lorsqu'une pression est appliquée entre la tête de sonotrode (11) et l'enclume (5), le capteur de force (9) est soumis à une pression par l'ensemble de sonotrode (3).

6. Dispositif de soudage par ultrasons selon l'une des revendications précédentes, comportant en outre un dispositif de commande (39) qui est configuré pour régler des caractéristiques du dispositif de soudage par ultrasons (1) en tenant compte de signaux du capteur de force (9).

7. Dispositif de soudage par ultrasons selon la revendication 6,
dans lequel le dispositif de commande (39) est configuré pour régler une force (Fa) générée au moyen du dispositif de déplacement (7) entre l'ensemble de sonotrode (3) et l'enclume (5), en tenant compte des signaux du capteur de force (9).

8. Dispositif de soudage par ultrasons selon l'une des revendications 6 et 7,
dans lequel le dispositif de commande (39) est configuré pour régler une génération d'ultrasons dans l'ensemble de sonotrode (3) en tenant compte des signaux du capteur de force (9).

9. Dispositif de soudage par ultrasons selon l'une des revendications précédentes, comportant en outre un dispositif de surveillance (41) qui est configuré pour déterminer des informations sur un état actuel du dispositif de soudage par ultrasons (1) sur la base de signaux du capteur de force (9).

10. Procédé pour faire fonctionner un dispositif de soudage par ultrasons (1) selon l'une des revendications précédentes, dans lequel le procédé comporte de :
déterminer une force (Fs) que l'ensemble de sonotrode (3) exerce sur le capteur de force (9),
faire fonctionner le dispositif de soudage par ultrasons (1) en tenant compte de la force (Fs) déterminée.

11. Procédé selon la revendication 10,
comprenant en outre de :
régler des caractéristiques du dispositif de soudage par ultrasons (1) en tenant compte de la force (Fs) déterminée qui varie dans le temps.

12. Procédé selon l'une des revendications 10 et 11, comprenant en outre de :
régler une force (Fa) générée au moyen du dispositif de déplacement (7) entre l'ensemble de sonotrode (3) et l'enclume (5), en tenant compte de la force (Fs) déterminée.

13. Procédé selon l'une des revendications 10 à 12, comprenant en outre de :
régler une génération d'ultrasons dans l'ensemble de sonotrode (3) en tenant compte de la force (Fs) déterminée.

14. Procédé selon l'une des revendications 10 à 13, comprenant en outre de :
déterminer et fournir des informations sur un état actuel du dispositif de soudage par ultrasons (1) en tenant compte de la force (Fs) déterminée.
